# EUROPEAN PATENT APPLICATION

(11) **EP 4 653 085 A1**
(43) Date of publication of application: **26.11.2025**
(21) Application number: 24177916.4
(22) Date of filing: 24.05.2024
(51) Int. Cl.: B01J 21/06, B01D 53/94, B01J 23/22, B01J 23/30, B01J 29/76, B01J 35/00, B01J 37/00, B01J 37/04, B01J 37/08

(54) **CATALYST COMPOSITION USEFUL FOR SELECTIVE CATALYTIC REDUCTION**

(71) Applicant: Treibacher Industrie AG, 9330 Treibach-Althofen (AT)
(72) Inventor: Sagar, Amod, 9330 Althofen (AT); Czakler, Matthias, 9330 Althofen (AT)
(74) Representative: Schwarz & Partner Patentanwälte GmbH

(57) **Abstract**

The present invention relates to a catalyst composition comprising three components (a), (b) and (c), wherein
(a) is a zeolite compound,
(b) is a metal vanadate of formula MVO₄ and
(c) is a titania (TiO₂) containing component, containing TiO₂ in an amount of at least

70 wt.-%, the remainder being a stabilizer for anatase titania
wherein the amount of component (a) is >40% to 90%, based on the sum of components (a), (b) and (c),
wherein the amount of component (b) is 0.5 wt.% to 20 wt.%, based on the sum of components (a), (b) and (c),
wherein the amount of component (c) is 5 wt.% to <59.5 wt.%, based on the sum of components (a), (b) and (c).

## Description

The present invention relates to a thermally stable catalyst composition for use in an NH₃-SCR process for Selective Catalytic Reduction (SCR) of NOₓ in exhaust gases.

### Background of the Invention

Nitrogen oxides (NOₓ) are well known, harmful components of many different exhaust gases and thus emissions-limits of NOₓ are regulated worldwide. Therefore, different deNOₓ-processes to reduce the NOₓ from exhaust gases have been developed in the last century. One of these processes is the selective catalytic reduction (SCR) of NOₓ. Even though the environmentally harmful properties of NOₓ have been known for a long time, the NOₓ emission-limits are still getting more stringent, which require the use of more efficient SCR-catalysts.

SCR was originally developed for stationary emission sources, mainly power plants. However, it soon evolved into a promising technology for NOₓ removal in automotive applications as well. NOₓ can be reduced in diesel exhaust gas or in stationary applications, e.g., gas turbines, by the Selective Catalytic Reduction (SCR) process.

The most widely employed technology for the removal of NOₓ out of exhaust gases is Selective Catalytic Reduction, see e.g. O. Kröcher, Chapter 9 in "Past and Present in deNOx Catalysis", edited by P. Granger et al., published by Elsevier 2007. Accordingly, NOₓ is removed by Ammonia into Nitrogen and water according to the reaction:

4 NO + 4 NH₃+ O₂ = 4 N₂ + 6 H₂O

For the stationary applications, mainly V₂O₅ doped TiO₂/WO₃ compositions have been commercially used since 1970 to remove nitrogen oxide emissions from fossil fuel power plants.

Catalytic coatings of zeolite-based SCR are currently being developed because of the limited temperature stability of the vanadium catalysts and the fact that Vanadium Pentaoxide (V₂O₅) has been classified as a health risk in some countries. Increased temperature stability is especially important in SCR catalysts installed downstream of a particulate filter since relatively high temperatures are generated during filter regeneration (M. Rice, R. Mueller at al., Development of an Integrated NOx and PM Reduction After-treatment System: SCRi for Advanced Diesel Engines, SAE technical paper 2008-01-132, SAE World Congress Detroit, Michigan Apr 14-17, (2008)).

There are further reports on the commercially applied V₂O₅/WO₃-TiO₂ material for exhaust gas after-treatment of automotives by O. Kröcher in Chapter 9, "Past and Present in deNOx Catalysis", edited by P. Granger *et al.* According to the presentation given by Dirk Vatareck (Catalysts Automotive Applications, Argillon) at the 3rd CTI Forum SCR Systems (Bonn 09 Apr 2008), titania-tungsten oxide-based catalysts containing V₂O₅ as an active component are applied for making automotive catalysts in a huge number (approx. 4 Mio. catalysts/year). The preparation of V₂O₅ containing materials based on TiO₂/WO₃, which additionally may contain oxides out of transition metals, rare earths and other elements and the application in SCR is widely disclosed in numerous publications, patent applications, and patents.

For example, GB 1 495 396 describes a catalyst composition containing as active ingredients oxides from titanium, at least one of molybdenum, tungsten, iron, vanadium, nickel, cobalt, copper, chromium and uranium, and as optional component(s) tin and/or at least one of silver, beryllium, magnesium, zinc, boron, aluminium, yttrium, rare earth metal, silicon, niobium, antimony, bismuth, manganese, thorium and zirconium, which oxides are present as an intimate mixture.

However, with increasingly stringent automotive exhaust emission regulations for Diesel vehicles, after-treatment systems containing a Diesel Particulate Filter (DPF) as well as an SCR catalyst are required. Such systems will demand a higher temperature stability of the SCR catalyst and V₂O₅-based systems are not considered to be viable for such an application as additionally to the problem of heat stability, V₂O₅ may also be exhausted to the environment (Munch J. et al., "Extruded Zeolite based Honeycomb Catalyst for NOx Removal from Diesel Exhaust, SAE Technical Paper (2008)). Since the activity of SCR catalysts in the temperature range of 180 - 350 °C is important in the diesel application, there have been established systems to improve catalytic activity in the low-temperature range. This clearly indicates that such systems lack thermal durability, and the performance of vanadium-based systems above 500 °C may not be acceptable.

Numerous catalysts have been developed in recent years to overcome these drawbacks.

For instance, in WO 2010/121280 A1 a catalyst composition is disclosed that is represented by general formula XVO₄/S, where XVO₄ stands for transition metal vanadate, or mixed transition metal/rare earth vanadate and S is a support comprising TiO₂. The maximum deNOₓ performance at 550 °C (measured on coated cordierite and with further parameters differing from the measuring method described below in the example section) was 70%.

Another example relates to WO 2011/127505 A1, describing a catalyst composition comprising a vanadate represented by formula XVO₄/S where XVO₄ stands for Bi-, Sb-, Ga- and/or Al- vanadate optionally in mixture with one or more transition metal vanadates, and S is a support comprising TiO₂. Such materials possess very high hydrothermal stability but lack deNOₓ performance above 550 °C.

The use of metal vanadates in SCR is furthermore disclosed in WO 2005/046864.

One class of SCR catalysts that has been investigated for treating NOₓ from an internal combustion engine exhaust gas relates to transition metal exchanged zeolites (see WO 99/39809 and US 4,961,917).

However, the use of aluminosilicate zeolites such as ZSM-5 and beta zeolites has a number of drawbacks.

Such zeolites are susceptible to de-alumination during high-temperature hydrothermal aging, resulting in a loss of acidity, especially with Cu/beta and Cu/ZSM-5 catalysts. Both beta- and ZSM-5-based catalysts are also affected by hydrocarbons, which become adsorbed on the catalysts at relatively low temperatures and are oxidized as the temperature of the catalytic system is raised, generating a significant exotherm, which can thermally damage the catalyst. This problem is particularly acute in vehicular diesel applications where significant quantities of hydrocarbon can be adsorbed on the catalyst during cold-start. Also, beta and ZSM-5 zeolites are prone to coking by hydrocarbons, which reduces the catalyst's performance.

Accordingly, there remains a need for improved catalysts for selective catalytic reduction processes.

In WO 2014/027207, a catalyst composition for treating exhaust gas comprising a blend of a first component and second component is disclosed, wherein the first component is an aluminosilicate or ferrosilicate molecular sieve and the second component is a vanadium oxide supported on a metal oxide support. According to the example section, at most 20% of the molecular sieve component are employed. It is disclosed therein that the described system shows improved deNOₓ from 200 °C - 400 °C in comparison to conventional V₂O₅-TiO₂/WO₃ catalysts, while there is a drop in performance above 450 °C. Also, no data for deNOₓ above 500 °C is disclosed therein.

US 10,773,252 B2 discloses catalysts comprising MoOs and/or WO₃, V₂O₅, TiO₂, and zeolite. According to US 10,773,252 B2, these catalysts are designed for coal or oil power plants that operate at temperatures between 300 °C and 450 °C for treating NOₓ and elemental Hg.

In EP 3 600 659 B1 a catalyst composition is described, wherein the first component is a mixture of two different zeolites and the second component is a vanadium oxide supported on TiO₂ or silica-stabilised TiO₂. The system clearly shows a drop in deNOₓ above 400 °C.

EP 0 234 441 B1 relates to a catalyst for selective catalytic reduction of NOₓ to N₂ in the presence of NH₃ in the form of composite bodies formed from a mixture of ZrO₂, zeolite, a binder and optionally a promoter selected from oxides of vanadium and copper. The NOₓ conversion of the catalyst is disclosed only at 350 °C and no mention is made about the deNOₓ conversion at temperatures above 550 °C.

US 2010/0221160 A1 describes a catalyst that includes ceria-zirconia and a metal-zeolite. The ceria and zirconia mixed oxides are present in the catalyst in a maximum amount of 50% per weight, and the rest is a Fe-zeolite compound.

WO 2016/046129 A1 also discloses the use of mixtures of zeolites and aluminium ceria zirconia mixed oxide. The composition shows good deNOₓ activity at temperatures up to 500 °C. No test results were provided above 500 °C.

US 7,695,703 B2 discloses a process for producing a stable high-temperature catalyst for reducing nitrogen oxides at operating temperatures from 300 °C to 700 °C, where a zeolite material is first steam-treated at a temperature and duration sufficient to partially de-aluminate the zeolite to approximately steady state, but not sufficient to fully collapse the zeolite structure.

US 6,569,394 B2 discloses the use of a catalyst with an active material that contains zeolite and titanium dioxide. It is disclosed that the catalyst is made using 50% by weight of hydrogen exchanged zeolite and 50% by weight of the active component, which had 90% TiO₂ and 10% WO₃. However, while US 6,569,394 B2 claims that the system is thermally stable after coating the catalyst on cordierite, the results exhibit that deNOₓ performance is below 60% in all temperature conditions.

Dave Chapman and Dr. Karl Schermanz during the "DEER conference 2012", presented the benefit of metal vanadate on TiO₂ e.g. FeVO₄-TiO₂-based SCR catalysts exhibit low V-volatility in comparison to standard V₂O₅-TiO₂-based SCR systems. Hydrothermal stability of XVO₄/S has been illustrated in WO 2010121280 A1.

It is known that FeVO₄ has a higher melting point of 850 °C (Behofsits T. et al., Electrochemical Properties of CeVO4 and FeVO4 at High Temperatures, ECS Transactions 63, 1, 137-144 (2014)) as compared to V₂O₅ which has a melting point of 690 °C and hence, is prone to less V-volatility. Byrappa K. et al. highlight in their publication "Growth, morphology and mechanism of rare earth vanadate crystals under mild hydrothermal conditions, Journal of Crystal Growth 306, 11, 94-101 (2007)" that rare earth vanadates (REVO₄) have higher melting points than V₂O₅, e.g. LaVO₄ and YVO₄ have melting point higher than 1800 °C.

Asima *et al.* reported about the stabilization of iron zeolite by rare earths e.g., La, Pr, and Gd, in their publication "Development and validation of rare earth modified Fe-BEA zeolite for mitigation of NOₓ from NH₃ gas turbines (Asima S et al., Development and validation of rare earth modified Fe-BEA SCR catalyst for mitigation of NOx from NH3 gas turbine, Cleaner Materials 4, 100096 (2022)).

As regards the treatment of exhaust streams in power plants with high temperature, e.g. in simple cycle power plants the temperature of the exhaust leaving a high efficiency gas turbine can exceed 600 °C. Absent any heat exchange surfaces in the post turbine enclosure, the reactions between ammonia and NO, encounter these high temperatures. This requires an SCR catalyst durable to high temperatures and thermal shock since the temperature in the gas turbine exhaust reaches its maximum in a short period of time, e.g. 10 minutes.

Known catalysts even after modification with zeolites do not provide stability and sufficient NOx removal efficiency at temperatures above 550 °C. Thus, they cannot reduce NOx emmissions in a direct gas turbine exhaust, such as in simple cycle power plants, without dilution of exhaust gas with ambient air. However, dilution of the exhaust significantly reduces an overall gas turbine efficiency and is not a cost effective option.

### Short Description of the Invention

The compositions disclosed in the state-of-the-art do not fulfill all the requirements of deNOₓ performance, especially in the high-temperature range. Therefore, the aim of the present invention is to provide a novel kind of catalyst composition which is thermally stable and shows high catalytic activity at elevated operation temperatures compared to state-of-the-art materials.

The object of the present invention is solved by a catalyst composition comprising three components (a), (b) and (c), wherein
(a) is a zeolite compound
(b) is a metal vanadate of formula MVO₄
(c) is a titania (TiO₂) containing component, containing TiO₂ in an amount of at least 70 wt.%, the remainder being a stabiliser for anatase titania

wherein the amount of component (a) is >40% to 90%, based on the sum of components (a), (b) and (c),
wherein the amount of component (b) is 0.5 wt.% to 20 wt.%, based on the sum of components (a), (b) and (c), and
wherein the amount of component (c) is 5 wt.% to <59.5 wt.%, based on the sum of components (a), (b) and (c).

Another aspect of the present invention relates to the use of a catalyst composition defined herein as SCR catalyst for removing nitrogen oxides.

Preferred embodiments of the present invention are defined in the dependent claims.

### Short Description of the Figures

- Fig. 1: shows the comparison of Example 1 with Comparative Examples 1 and 2.
- Fig. 2: shows the comparison of Examples 1 and 3 with Comparative Example 1.
- Fig. 3: shows the comparison of Example 2 with Comparative Examples 1 and 7.
- Fig. 4: shows the comparison of Examples 2 and 6 with Comparative Examples 1 and 7.
- Fig. 5: shows the comparison of Examples 1 and 8 to 10 with Comparative Example 1.
- Fig. 6: shows the comparison of Example 7 with Comparative Examples 1 and 6.

### Detailed Description of the Invention

It has been surprisingly found that the catalytic composition of the present invention is highly active for reducing NOₓ at temperatures between 300 °C and 700 °C, in particular at operation temperatures above 550 °C. The composition of the present invention can be directly used in high-temperature applications without the need to dilute the exhaust with ambient air.

The catalyst composition according to the present invention reduces NOₓ effectively at high temperatures due to a synergy between the three components (a), (b) and (c) in comparison to state-of-the-art catalysts.

According to the present invention, the first component is a zeolite compound (a).

The zeolite compound (a) is present in the catalyst composition in an amount of from >40% to 90%, such as 45% to 70%, e.g., 50% to 60%, based on the sum of components (a), (b) and (c).

The amount of zeolite in the catalyst composition can be determined by known methods in the art, such as X-ray fluorescence (XRF) or X-ray diffraction (XRD) measurements. The assignment of the zeolite as well as the determination of the weight ratio of zeolite can be derived from the X-ray patterns using Rietveld analysis.

It has been found that a superior deNOₓ performance can be achieved at a zeolite amount of more than 40% per weight in the catalyst composition (based on the total amount of components (a), (b) and (c)).

Zeolite compounds are known in the art and include microporous, aluminosilicate minerals commonly used as commercial adsorbents and catalysts. Zeolites are sometimes also referred to as molecular sieves. Zeolites occur naturally but are also produced industrially on a large scale. Some of the more common mineral zeolites are analcime, chabazite, clinoptilolite, heulandite, natrolite, phillipsite, and stilbite. Zeolites have a porous structure that can accommodate a wide variety of cations, such as Na⁺, K⁺, Ca²⁺, Mg²⁺ and others. These positive ions are rather loosely held and can readily be exchanged for others e.g. Fe²⁺, Fe³⁺, Cu⁺ and Cu²⁺ in a contact solution. For the purpose of the present invention the term "zeolite compound" includes also zeolite-like compounds e.g. alumino-phosphate materials, MCM-41, SBA-15 and FSM-16.

The zeolite compound (a) is preferably selected from the group consisting of beta zeolite, ultrastable zeolite Y (USY), MFI (such Zeolite Socony Mobile 5 - ZSM5), CHA (Chabazite), FER (Ferrierite), ERI (erionite), SAPO (silicoaluminophosphates), such as SAPO 11, SAPO 17, SAPO 34, SAPO 56, ALPO (amorphous aluminophospates), such as ALPO 11, ALPO 17, ALPO 34, ALPO 56, SSZ-13, ZSM-34 and mixtures thereof.

In one embodiment of the present invention, the zeolite compound (a) possesses an MFI, BEA (zeolite beta), USY, CHA, SAPO or FER framework structure. Such zeolites are commercially available, e.g. from the company CLARIANT, and can be e.g. produced following the synthesis procedure as described in WO 2008/141823.

Preferably, the catalyst composition of the present invention is characterized in that at least part of the zeolite component (a) is an Fe-exchanged zeolite. Furthermore, the zeolite component can also be a mixture of Fe-exchanged zeolite and non-exchanged zeolites.

Under "non-exchanged zeolites", the skilled person understands zeolites in their original form (normally Na-form) that have not yet undergone an ion exchange with either metals or even H⁺.

In an Fe-exchanged zeolite, the zeolite compound of component (a) may contain Fe cations in an amount of 0.05 - 15% by weight (calculated as Fe metal), preferably 0.1-10 weight %, most preferably 1-8 weight %, based on total weight of the zeolite compound. The total weight of the zeolite compound (including weight of Fe ions) counts as the weight amount of component (a).

In a preferred embodiment of the present invention, the Fe-exchanged zeolite is selected from the group consisting of Fe-BEA, Fe-FER, Fe-MFI, Fe-USY Fe-CHA, Fe-SAPO or mixtures thereof.

A Fe-containing zeolite of BEA and CHA structure is described in US 2013/0004398. Furthermore, the preparation of Fe-BEA or SAPO 34 zeolite is described in EP 2 150 328 B1.

In a further preferred embodiment of the present invention, at least part of the zeolite component (a) is in H⁺-form, in particular is an H⁺-exchanged zeolite, such as in particular H-BEA. H-MFI, H-USY, H-FER, H-CHA, H-SAPO or mixtures thereof.

It has been found that when employing an H⁺-exchanged zeolite in the composition of the present invention, in particular H-BEA, the amount of component (a) may be even lower than >40 wt.%, such as 35 wt.% or more or 40 wt.% or more, still exhibiting advantageous effects.

Component (a) may also be present as a mixture of an Fe-exchanged zeolite and an H⁺-ion exchanged zeolite.

The zeolite compound (a) may also be doped with a rare earth compound, in particular La, Gd, Pr, or with other metal compounds such as Zr or Ba, or mixtures thereof.

In the present invention, a metal vanadate represented as MVO₄ is also a component in the catalytic composition (component (b)).

The metal vanadate (MVO₄) used in the composition is one wherein metal (M) in MVO₄ can preferably be selected from rare earth metals, more preferably from Er, Ce, Y, La, Gd, Nd, Ho, Sm, Pr, Dy, Eu, Yb, Lu, and mixtures thereof, most preferably from Er, La, Gd, Y, and mixtures thereof.

The inventors have observed that especially Er, La, Gd, and/or Y as metal M in the MVO₄ used in the catalyst compostion contributed to high deNOₓ performance, particularly at temperatures above 550 °C.

Furthermore, also Fe and/or Al may be used as metals (M) in MVO₄ in the catalyst composition of the present invention, optionally in mixture with a rare earth metal, such as e.g. Er.

The metal vanadate in the present invention can have a crystal structure, meaning that the vanadate is characterized by a three-dimensional-ordered arrangement of the atoms. Such a structure can be identified *via* powder X-Ray Diffraction (XRD). The results of this type of measurement are reflection patterns, which are collected by ICDD (International Centre for Diffraction Data). Non-exhaustive examples of metal vanadate crystal structures are illustrated in the literature, such as by Leniec G. et al. (Growth and EPR properties of ErVO4 single crystals, Nukleonika 60, 3, 405-410 (2015)) and Kaczmarek S. M. et al. (EPR Properties of Concentrated NdVO4 Single Crystal System, Applied magnetic resonance 46, 1023-1033 (2015)) where certain rare earth vanadates e.g. ErVO₄ or YVO₄ etc. can have tetragonal zircon-type structure and belong to tetragonal space group I4*₁*/*amd.* FeVO₄ and AlVO₄ can have triclinic crystal structures at ambient conditions, as illustrated in the publication by López-Moreno S. et al. (Stability of FeVO4 under Pressure: An X-ray Diffraction and First-Principles Study, Inorganic Chemistry 57, 13, 7860-7876 (2018)). Also, the literature "Thermodynamics of solid phases containing rare earth oxides" by Navrotsky A. et al. in The Journal of Chemical Thermodynamics 88, 126-141 (2015) reports on the crystal structure of rare earth vanadates (REVO₄).

Metal vanadates can be prepared according to the processes described in WO 2005/046864 A1.

Preferably, the metal vanadate in the present invention is essentially free from any oxide of vanadium e.g., vanadium pentoxide (V₂O₅), vanadium trioxide, vanadium dioxide, or mixtures thereof.

In particular, it has been found that a blend of zeolite, metal oxide and vanadium pentoxide results in poor performance compared to the catalyst compositions of the present invention (see e.g., Comparative Example 13 below).

The amount of metal vanadate (b) used in the catalyst composition of the present invention (based on the sum of components (a) + (b) + (c)) ranges from 0.5% to 20% by weight, preferably 1 - 15% by weight, most preferably 1 - 10% by weight.

In a preferred embodiment, the metal vanadate used in the composition of the present invention may be used after drying at 80 - 300 °C more preferably 100 - 200 °C, most preferably from 100 - 150 °C for 1 - 20h, more preferably 5 - 20h, most preferably 15 - 20h.

In another preferred embodiment, the metal vanadate, most preferably, may optionally be pre-heat treated from 400 - 900 °C , more preferably from 450 - 800 °C, most preferably 500 - 800 °C for a period of preferably 5 - 20h, most preferably 5 - 10h.

In one case of the present invention, ErVO₄ was used, most preferably, pre-heat treated at 700 °C/10h with a ramping rate of 10 °C/min and is termed as ErVO₄ (PHT).

Similarly, in other embodiments of the present invention, LaVO₄, YVO₄ and GdVO₄ were pre-heat treated at 700 °C/10h and termed as LaVO₄(PHT), YVO₄(PHT), GdVO₄(PHT).

The catalyst composition according to the present invention also comprises a titania (TiO₂) containing component (c).

The amount of component (c) in the catalyst composition according to the present invention ranges from 5% by weight to <59.5% by weight, preferably 7% by weight to 50% by weight (based on the sum of components (a) + (b) + (c)).

Component (c) of the present invention contains TiO₂ in an amount of at least 70 wt.-%. The remainder of component (c) is a stabilizer for anatase titania.

It is known that titania used for catalytic compositions may contain stabilizers for the crystalline anatase phase. These stabilizers, by way of the production process, such as impregnation and sol-gel methods are incorporated into the crystalline lattice of the titania.

The stabilizer in component (c) may preferably contain WO₃ and optionally SiO₂. It is well known in the art that WO₃, optionally in mixture with SiO₂, promotes the effect of anatase titania in a catalytic composition. Commercial products containing mixtures of titania stabilized with WO₃ and, optionally, SiO₂, are also often called "supports".

For instance, component (c) can be TiO₂, TiO₂-WO₃ or TiO₂-WO₃-SiO₂.

Depending on whether component (c) is TiO₂, TiO₂-WO₃ or TiO₂-WO₃-SiO₂ the amount of component (c) is either the amount of TiO₂ or the sum of TiO₂ and WO₃ present in component (c), or the sum of TiO_{2,}WO₃ and SiO₂ present in component (c).

Other potential stabilizers that may be contained in component (c), optionally in mixture with WO₃ and/or SiO₂, are e.g Nb₂O₅ or Al₂O₃.

By way of elemental analysis (such as XRF analysis) and crystallography, especially XRD together with quantitative evaluation such as per Rietveld analysis, it is possible for the skilled person to determine the respective amount of component (a) and component (c), even if both components may contain oxides of silicon.

As regards the titania in component (c), if titania is e.g. stabilized with WO₃ and, optionally, SiO₂, the structure of e.g. anatase is kept, only the lattice parameter can change (resulting in shifts of the reflexes in XRD). Hence the Titania compound (with optional stabilizers of WO₃ or SiO₂) can be identified as Anatase in an XRD. The change in the lattice parameters can be calculated from XRD and can also be used to calculate how much WO₃ or SiO₂ is incorporated.

Preferably, the titania in component (c) is in anatase form. The synthesis of anatase TiO₂-WO₃-SiO₂ and TiO₂-WO₃ is described in WO 2005/046864 A1 and US 4,466,947, respectively.

Anatase titania and anatase titania stabilized with WO₃ and, optionally SiO₂ is commercially available under the trade names of AK-1^{®} (TiO₂), A-DW1^{®} (TiO₂-WO₃), CristalACTiv^{™} DT-51 (TiO₂), CristalACTiv^{™} DT-52 (TiO₂-WO₃) and CristalACTiv^{™} DT-58 (TiO₂-WO₃-SiO₂).

In a preferred embodiment of the invention, the component (b) (MVO₄) is present in a mixture with a support of component (c), such as a TiO₂ support, a TiO₂-WO₃ support or a TiO₂-WO₃-SiO₂ support.

The catalyst composition may be characterized in that components (a), (b) and (c) are present in a physical mixture obtained by mixing all three components together.

In another preferred embodiment of the present invention, the catalyst composition is characterized in that the composition essentially consists of components (a), (b), and (c).

In this context, "essentially consists" means, that apart from impurities no further compounds except components (a), (b) and (c) are included in the catalyst composition.

Alternatively, the catalyst composition can additionally contain one or more metal oxide promoters, in particular zirconium oxide.

The promoters can be chosen from metal oxides which are known to enhance the thermal stability and/or catalytic activity, as known to the person skilled in the art. A particularly useful promoters is zirconium oxide. Another promoter that has been found to be useful is iron oxide. The amount of the promoter, can be 1 - 20% by weight, calculated as metal oxide (such as ZrO₂), more preferably 1 - 15% calculated as metal oxide, most preferably 5 - 15% by weight, calculated as metal oxide, based on total weight of the composition.

In any event, the amount of components (a), (b), (c) in the catalytic composition of the invention should be 80% by weight or more, preferably 85% by weight or more.

Preferably, the catalyst composition of the present invention is free of precious metals such as Ag, Pt, Au, Pd, Rh, Ru, Os, Ir, Co, In.

The catalyst composition of the present invention can be synthesized using a variety of processes.

Generally, the catalyst composition defined herein can be produced by:
1) Mixing a metal vanadate (b) of the formula MVO₄ and a titania (TiO₂) containing component (c),
2) Optionally calcining the mixture to obtain a calcined powder of component (b) and component (c),
3) Suspending a zeolite compound (a) in de-ionized water and stirring to obtain a homogeneous suspension,
4) Optionally adding a metal oxide promotor or a precursor thereof, such as ZrO₂, zirconium acetate or a zirconyl nitrate solution, to the suspension of step 3),
5) Adding the mixture of step 1) or the powder of step 2) to the suspension prepared in step 3) or 4),
6) Heating the mixture of step 5) to evaporate excess de-ionized water and drying said mixture,
7) Calcining the dried mixture to obtain a powder, and
8) Sieving the powder upon a mesh (150 to 250 µm).

To obtain the MVO₄₋TiO₂ powder in step 1), the metal vanadate (b) and a titania (TiO₂) containing component (c) can be mixed together in agate mortar or in a high shear force mixer, e.g., for 10 minutes.

Calcination may be carried out as appropriate, according to conventional methods, e.g. by heating the powder preferably in the presence of oxygen, more preferably under air at appropriate temperature. An appropriate temperature for calcining would be between 550 and 800 °C for a period of 5 - 10 hours. The calcination temperature and duration can be adapted depending on the properties of the starting material, as known in the art. Preferably, calcining can be performed with a ramping rate of 10 °C/min. The calcination in steps 2) and 7), respectively, can be performed under different conditions, for instance, at different temperatures and/or durations.

Optionally, as discussed above, a metal oxide promoter or a precursor thereof, e.g. ZrO₂, zirconium acetate or a zirconyl nitrate solution can be added to the suspension of step 3), preferably in an amount ranging from 5% to 20% calculated as metal oxide in the final composition in addition to the mixture of components (a), (b) and (c).

To evaporate excess de-ionized water, the mixture of step 6) can be heated to temperatures between 80 and 100 °C and then dried at 100 - 120 °C for at least 20h, preferably overnight.

The MVO₄ - TiO₂ powder can also be prepared according to the processes described in WO 2005/046864 A1, section 1.4.1.

Alternatively, the components (a), (b) and (c) can be physically mixed in one single step, preferably in agate mortar or in a high shear force mixer for a period of e.g., 10 minutes. In this case, a metal oxide promotor can be optionally added to the physical mixture and further mixed for e.g. 10 minutes, wherein the mixture can then be calcined, e.g. at a temperature of 550 - 800 °C for a period of 5 - 20h.

In a preferred embodiment of the present invention, the metal vanadate (b) is dried before step a) at 80 - 300 °C, more preferably 100 - 200 °C, most preferably from 100 - 150 °C for 1 - 20h, more preferably 5 - 20h, most preferably 15 - 20h.

In another preferred embodiment, the metal vanadate (b) is pre-heat treated before step a) in a range from 400 - 900 °C, more preferably from 450 - 800 °C, most preferably 500 - 800 °C for a period of preferably 5 - 20h, most preferably 5 - 10h.

The composition of the present invention is useful as an SCR catalyst for removing nitrogen oxides.

The catalyst compositions described in the present invention can be employed in a variety of geometric forms e.g. powder, beads, rings, spheres, granules etc.

The catalyst composition can also be extruded as a monolith or may be used for making a coated catalyst by applying the composition in a washcoat process and coating a substrate.

The composition can be combined with binders and other auxiliary materials as known in the art.

The substrate may be selected from metallic substrates, Ceramic substrates and extruded honeycombs.

The cell density "cells per square inch" (cpsi) of the substrate used for coating may vary from 64 to 400 cpsi.

In particular, the substrate can be cordierite, mullite, SiC or Al titanate or filter candles.

The catalyst composition of the present invention may be useful particularly in exhaust gas after-treatment of diesel and lean-burn engines of mobile applications such as automotive or non-road applications, but most preferably in stationary applications, particularly in gas turbines or gas engines combusting eg. biogas, natural gas or even hydrogen. The catalyst composition of the present invention may also be useful for reducing NOx in gas streams from non-combustion applications such as the production of nitric acid

Preferebly, the catalyst composition can be employed at temperatures of from 300 - 750 °C, preferably 500 - 700 °C, most preferably 550 - 650 °C.

The present invention also provides a method for removing nitrogen oxides, e.g. for selective catalytic reduction of NOₓ, in exhaust gases, characterized in that a process stream, such as an exhaust gas comprising NOₓ and/or NH₃ is contacted with the catalytic composition of the invention.

The present invention is explained in more detail in the following examples and comparative examples, without being limited thereto.

### Examples

In the following the term "TiO₂" is in some instances not only used for TiO₂ itself but also as abbreviation for cases of component (c) containing only TiO₂ as well as components (c) containing TiO₂ and WO₃ as stabilizer or containing TiO₂, WO₃ and SiO₂ as stabilizer.

### Sample preparation

### Example 1: 50% Fe-BEA zeolite - 50% (8.4% ErVO₄ - 91.6% TiO₂ (81% TiO₂ - 8.9% WO₃-10.1 %SiO₂))

For making 50g of an SCR catalyst, 25g of Fe-BEA zeolite (Clariant) was suspended in 300g deionized (DI) water and stirred effectively to a resultant suspension. ErVO₄ (PHT) was prepared by pre-heat treatment at 700 °C/10h with a ramping rate of 10 °C/min.

ErVO₄ (PHT) (12.61g) was mixed with of Anatase TiO₂ (138.79g ) containing WO₃ and SiO₂ as stabilizer (CristalACTiV^{™} DT58; 81%TiO2 - 8.9% WO₃ - 10.1% SiO₂, ROI: 99%) in a high shear force mixer for a period of 2 minutes to get a homogenous mixture. The mixture was then calcined at 800 °C/10h with a ramping rate of 10 °C/min to obtain a catalyst powder. The catalyst powder was sieved (250 µm) and 25g of the resultant 8.4% ErVO₄ (PHT) - 91.6 %TiO₂ powder was added very slowly to the Fe-zeolite suspension. The mixture was then stirred at room temperature (10 mins) before the excess water was evaporated at 80 °C and the resultant residue was dried at 110 °C/20h. The solid was calcined at 600 °C/5h with a ramping rate of 10 °C/min followed by sieving (250 µm mesh).

### Example 2: [54.55% Fe-BEA zeolite - 45.45% (8.4% ErVO₄- 91.6% TiO₂ (81%TiO₂-8.9% WO₃-10.1% SiO₂))] + 13.63% ZrO₂ as promoter

24g of Fe-BEA zeolite was suspended in 300g of DI water with effective stirring before 27.42g of zirconium acetate solution (ZrO₂ content: 21.88%) was added to the suspension with effective stirring. 20g of 8.4% ErVO₄ (PHT) - 91.6% TiO₂ containing WO₃ and SiO₂ as stabilizer (CristalACTiV^{™} DT58) catalyst powder as prepared in Example 1 was added to the suspension and the final mixture was stirred for 15 minutes at room temperature. Excess water was evaporated at 80 °C and the residue was dried at 110 °C for 20h. The resultant solid was calcined at 600 °C/5h with a ramping rate of 10 °C/min. Finally, the SCR catalyst was sieved through 150 µm.

### Example 3: 50% Fe-BEA zeolite - 4.2% ErVO₄- 45.8% TiO₂ (90% TiO₂- 10%WO₃)

2.12g of ErVO₄ (PHT) and 23.13g TiO₂ containing WO₃ as stabilizer (CristalACTiV^{™} DT52) were mixed in an agate mortar for 10 minutes before 25.25g Fe-BEA zeolite (Clariant) was added to the mixture and further mixed in an agate mortar for 10 minutes. Finally, the mixture was calcined at 700 °C/5h with a ramping rate of 10 °C/min. The resultant powder was sieved through 250 µm.

### Example 4: 70% Fe-BEA zeolite - 30% (8.4% ErVO₄ - 91.6% TiO₂ (81% TiO₂ - 8.9% WO₃ - 10.1 %SiO₂))

35g of Fe-zeolite was suspended in 200g de-ionized water and stirred for 5 minutes before 15g of 8.4% ErVO₄ (PHT) - 91.6%TiO₂ containing WO₃ and SiO₂ as stabilizer (CristalACTiV^{™} DT58), as prepared in Example 1, was added very slowly to the suspension. The mixture was stirred at room temperature for 10 minutes and excess water was evaporated at 80 °C. The residue was then dried at 110 °C for a period of 20h before the mixture was calcined at 600 °C/5h with a ramping rate of 10 °C/min and sieved through 250 µm.

### Example 5: [50% Fe-BEA zeolite - 4.2% ErVO₄ - 45.8% TiO₂ (90% TiO₂ - 10% WO₃)] + 13.63% ZrO₂ as promoter

In order to prepare 50g of an SCR catalyst as powder, 1.87g of ErVO₄ (PHT) was mixed with 20.35g anatase TiO₂ containing WO₃ as stabilizer (CristalACTiV^{™} DT52) in agate mortar for 10 minutes. 22.22g of Fe-BEA Zeolite was suspended in 200g DI water with effective stirring, 27.42g Zirconium acetate solution (ZrO₂: 21.9%) was then added to Fe-zeolite suspension and mixed for 10 minutes. The ErVO₄-TiO₂ mixture was added to the Fe-zeolite suspension under effective stirring. Excess water was then evaporated at 80 °C and the resulting mixture was dried at 120 °C for 20h. The mixture was calcined at 700 °C/5h with a ramping rate of 10 °C/min and the resultant powder was sieved through 150 µm.

### Example 6: [67.25% Fe-BEA zeolite - 32.75% (8.4% ErVO₄ - 91.6% TiO₂ (81% TiO₂-8.9% WO₃- 10.1 %SiO₂))] + 9.12% ZrO₂ as promotor

30.82 g of Fe-BEA zeolite was suspended in 300g of de-ionized water with effective stirring and followed by the addition of 19.09g of zirconium acetate solution (ZrO₂ content: 21.9%). 15.01g of 8.4% ErVO₄ (PHT) - TiO₂ containing WO₃ and SiO₂ as stabilizer (CristalACTiV^{™} DT58) catalyst powder as prepared in Example 1 was then added to the suspension and the final mixture was stirred for 15 minutes at room temperature. Excess water was evaporated at 80 °C and the residue was then dried at 110 °C for a period of 20h. The resultant material was calcined at 600 °C/5h with a ramping rate of 10 °C/min before the final powder was sieved through 150 µm.

### Example 7: 50% Fe-USY zeolite - 50% (8.4% ErVO₄ - 91.6% TiO₂ (81% TiO₂- 8.9% WO₃-10.1 %SiO₂))

For the preparation of Fe-USY zeolite, 39.65 g of an iron-nitrate solution (Fe₂O₃ content: 12.61%) was diluted with deionized water to 400g of an aqueous solution and 104.4g of hydrogen USY zeolite (Zeolyst^{™} CBV720; ROI: 91%; BET: 740 m²/g) was added very slowly under effective stirring at room temperature for 10 minutes. Excess water was then evaporated at 80 °C. The residue was dried at 110 °C for a period of 20h and the resultant mixture was homogenized and then calcined at 600 °C/5h with a ramping rate of 10 °C/min. The Fe-USY zeolite powder was sieved through 250µm.

The SCR catalyst powder (30g) was prepared by suspending 15g Fe-USY zeolite in 150g de-ionized water under agitation. 15g of 8.4% ErVO₄ (PHT) - 91.6% TiO₂ containing WO₃ and SiO₂ as stabilizer (CristalACTiV^{™} DT58) as prepared in Example 1 was added very slowly to the Fe-zeolite suspension and the mixture was stirred at room temperature for 10 minutes before water was evaporated at 80 °C. The residue was dried at 110 °C for 20h before the mixture was calcined at 700 °C/5h with a ramping rate of 10 °C/min and sieved through 250 µm.

### Example 8: 50%Fe-BEA zeolite - 4.2% LaVO₄ - 45.8% TiO₂ (81% TiO₂ - 8.9% WO₃-10.1 %SiO₂)

LaVO₄ was pre-heat treated at 700 °C/10h at ramping rate of 10 °C/min and is termed as LaVO₄ (PHT) to prepare 50g of an SCR catalyst powder; 2.12g of LaVO₄ (PHT) and 23.13g of TiO₂ containing WO₃ and SiO₂ as stabilizer (CristalACTiV^{™} DT58) were mixed in an agate mortar for 10 minutes. 25.25g of Fe-BEA zeolite (Clariant) was added to the mixture and further mixed in an agate mortar for an additional 10 minutes. Finally, the mixture was calcined at 800 °C/5h with a ramping rate of 10 °C/min and sieved through 250 µm.

### Example 9: 50%Fe-BEA zeolite - 4.2%GdVO₄ - 45.8% TiO₂ (81% TiO₂ - 8.9% WO₃-10.1 %SiO₂)

GdVO₄ was pre-heat treated at 700 °C/10h at ramping rate of 10 °C/min and is termed as GdVO₄ (PHT). To prepare 50g SCR catalyst powder, 2.12g of GdVO₄ (PHT) and 23.13g of TiO₂ containing WO₃ and SiO₂ as stabilizer (CristalACTiV^{™} DT58) were mixed in an agate mortar for 10 minutes. 25.25g of Fe-BEA zeolite (Clariant) was added to the above mixture and further mixed in agate mortar for an additional 10 minutes. Finally the mixture was calcined at 800 °C/5h with a ramping rate of 10 °C/min and sieved through 250 µm.

### Example 10: 50% Fe-BEA zeolite - 4.2% YVO₄ - 45.8% TiO₂ (81% TiO₂- 8.9% WO₃-10.1 %SiO₂)

YVO₄ was pre-heat treated at 700 °C/10h at ramping rate of 10 °C/min and is termed YVO₄ (PHT). To prepare 50g SCR catalyst as powder, 2.12g of YVO₄ (PHT) and 23.13g of TiO₂ containing WO₃ and SiO₂ as stabilizer (CristalACTiV^{™} DT58) was mixed in an agate mortar for 10 minutes. Added to this mixture, 25.25g of Fe-BEA zeolite (Clariant) and it was further mixed for an additional 10 minutes. Finally, the mixture was calcined at 800 °C/5h with a ramping rate of 10 °C/min and sieved through 250 µm.

### Example 11: 50% Fe-MFI zeolite - 50% (8.4% ErVO₄ - 91.6% TiO₂ (81% TiO₂ - 8.9% WO₃- 10.1 %SiO₂)

In order to prepare 30g of an SCR catalyst as powder; 15g of 8.4%ErVO₄(PHT) - 91.6%TiO₂ containing WO₃ and SiO₂ as stabilizer (CristalACTiV^{™} DT58) as prepared in Example 1 was mixed in an agate mortar with 15g of Fe-MFI zeolite (Clariant) for 10 minutes. Finally, the mixture was calcined at 700 °C/10h at a ramping rate of 10 °C/min and sieved through 250 µm.

### Example 12: [54.54% Fe-BEA zeolite - 3.82% LaVO₄ - 41.64% TiO₂ (81% TiO₂ - 8.9% WO₃- 10.1 %SiO₂)] + 13.63%ZrO₂ as promoter

In order to prepare 20g of an SCR catalyst as powder, 9.7 g of Fe-BEA zeolite was suspended in 100g of DI water with effective stirring and 10.96 g of zirconium acetate solution (ZrO₂ content: 21.9%) was added to the suspension. LaVO₄ (PHT) (0.68 g) was premixed in agate mortar with 7.4g TiO₂ containing WO₃ and SiO₂ as stabilizer (CristalACTiV^{™} DT58) and added to the suspension. The final mixture was stirred for 15 minutes at room temperature. Excess water was evaporated at 80 °C and the residue was dried at 110 °C for 20h. The material was then calcined at 700 °C/5h with a ramping rate of 10 °C/min. Finally, the SCR catalyst was sieved through 150 µm.

### Example 13: 50% H-BEA zeolite - 50% (8.4%ErVO₄ - 91.6% TiO₂ (81% TiO₂- 8.9% WO₃-10.1 %SiO₂))

In order to prepare 6g of an SCR catalyst as powder, 3.03g of 8.4% ErVO₄ (PHT) - 91.6% TiO₂ containing WO₃ and SiO₂ as stabilizer (CristalACTiV^{™} DT58) as prepared Example 1 was mixed in an agate mortar with 3.03g of H-BEA zeolite (Zeolyst) for 10 minutes. Finally, the mixture was calcined at 600 °C/5h with a ramping rate of 10 °C/min and sieved through 250 µm.

### Example 14: 50% H-BEA zeolite - 4.2% ErVO₄ - 45.8% TiO₂ (81% TiO₂- 8.9% WO₃-10.1 %SiO₂)

In order to prepare 6g of an SCR catalyst as powder, 0.42g of 8.4% ErVO₄ (PHT) and 4.63g of TiO₂ containing WO₃ and SiO₂ as stabilizer (CristalACTiV^{™} DT58) was mixed in an agate mortar for 5 minutes and then added to 5.48g of H-BEA zeolite (Zeolyst) and further mixed in agate mortar for 5 minutes. Finally, the mixture was calcined at 600 °C/5h with a ramping rate of 10 °C/min and sieved through 250 µm.

### Example 15: 30%Fe-BEA zeolite - 20% H-BEA - 50% (8.4%ErVO₄ - 91.6% TiO₂ (81% TiO₂- 8.9% WO₃- 10.1 %SiO₂))

In order to prepare 6g of an SCR catalyst as powder, 3.03g of 8.4% ErVO₄ (PHT) - 91.6% TiO₂ containing WO₃ and SiO₂ as stabilizer (CristalACTiV^{™} DT58) as prepared in Example

1 was mixed in an agate mortar with 1.21g of H-BEA zeolite (Zeolyst) and 1.97g of Fe-BEA zeolite (Clariant) for 5 minutes. Finally, the mixture was calcined at 600 °C/5h with a ramping rate of 10 °C/min and sieved through 250 µm.

### Example 16: 40% H-BEA zeolite - 60% (8.4%ErVO₄ - 91.6% TiO₂ (81% TiO₂- 8.9% WO₃-10.1 %SiO₂))

In order to prepare 6g of an SCR catalyst as powder, 3.64g of 8.4% ErVO₄ (PHT) - 91.6% TiO₂ containing WO₃ and SiO₂ as stabilizer (CristalACTiV^{™} DT58) as prepared in Example 1 was mixed in an agate mortar with 2.42g of H-BEA zeolite (Zeolyst) for 10 minutes. Finally, the mixture was calcined at 600 °C/5h with a ramping rate of 10 °C/min and sieved through 250 µm.

### Example 17: 60% H-BEA zeolite - 40% (8.4%ErVO₄ - 91.6% TiO₂ (81% TiO₂- 8.9% WO₃-10.1 %SiO₂))

In order to prepare 6g of an SCR catalyst as powder, 2.42g of 8.4% ErVO₄ (PHT) - 91.6% TiO₂ containing WO₃ and SiO₂ as stabilizer (CristalACTiV^{™} DT58) as prepared in Example 1 was mixed in an agate mortar with 3.64g of H-BEA zeolite (Zeolyst) for 10 minutes. Finally, the mixture was calcined at 600 °C/5h with a ramping rate of 10 °C/min and sieved through 250 µm.

### Example 18: 60%Fe-BEA Zeolite - 40% (8.4%ErVO₄ - 91.6% TiO₂ (81% TiO₂- 8.9% WO₃-10.1 %SiO₂))

In order to prepare 20g of an SCR catalyst as powder, 8.08g of 8.4%ErVO₄ (PHT) - 91.6%TiO₂ containing WO₃ and SiO₂ as stabilizer (CristalACTiV^{™} DT58) as prepared in Example 1 was mixed in an agate mortar with 12g of Fe-BEA Zeolite (Clariant) for 10 minutes. Finally, the mixture was calcined at 600 °C/5h with a ramping rate of 10 °C/min and sieved through 250µm.

### Example 19: 80%Fe-BEA Zeolite - 20% (8.4%ErVO₄ - 91.6% TiO₂ (81% TiO₂- 8.9% WO₃-10.1 %SiO₂))

In order to prepare 20g of an SCR catalyst as powder, 4.04g of 8.4%ErVO₄ (PHT) - 91.6%TiO₂ containing WO₃ and SiO₂ as stabilizer (CristalACTiV^{™} DT58) as prepared in Example 1 was mixed in an agate mortar with 16g of Fe-BEA Zeolite (Clariant) for 10 minutes. Finally, the mixture was calcined at 600 °C/5h with a ramping rate of 10 °C/min and sieved through 250µm.

### Example 20: 90%Fe-BEA Zeolite - 0.84%ErVO₄ - 9.16% TiO₂ (81% TiO₂ - 8.9% WO₃ - 10.1 %SiO₂)

In order to prepare 20g of an SCR catalyst as powder, 0.17g of 8.4%ErVO₄ (PHT), 1.85g TiO₂ containing WO₃ and SiO₂ as stabilizer (CristalACTiV^{™} DT58) was mixed in an agate mortar for 10 minutes. 18g of Fe-BEA Zeolite (Clariant) was added to the mixture and further mixed in agate mortar for 10 minutes. Finally, the mixture was calcined at 700 °C/5h with a ramping rate of 10 °C/min and sieved through 250µm.

### Example 21: 90%Fe-BEA Zeolite - 0.84%GdVO₄ - 9.16% TiO₂ (81% TiO₂ - 8.9% WO₃ - 10.1 %SiO₂)

In order to prepare 20g of an SCR catalyst as powder, 0.17g of 8.4%GdVO₄ (PHT), 1.85g TiO₂ containing WO₃ and SiO₂ as stabilizer (CristalACTiV^{™} DT58) was mixed in an agate mortar for 10 minutes. 18g of Fe-BEA Zeolite (Clariant) was added to the mixture and further mixed in agate mortar for 10 minutes. Finally, the mixture was calcined at 700 °C/5h with a ramping rate of 10 °C/min and sieved through 250µm.

### Example 22: [52.35%Fe-BEA zeolite - 4.4%ErVO₄ - 43.25% TiO₂] + 4.66% WO₃ as promotor

2.12g of ErVO4 (PHT), 2.53g of ammonium paratungstate (WO₃: 88.8%), 20.86g TiO₂ not containing a stabilizer were mixed in an agate mortar for 10 minutes. 25.25g of Fe-BEA zeolite was added to the above mixture and further mixed in agate mortar for additional 10 minutes. Finally, the mixture was calcined at 700 °C/10h with a ramping rate of 10 °C/min. The catalyst powder was then sieved through 250µm.

The resultant SCR catalyst powder was also thermally aged at 800 °C/5h with a ramping rate of 10 °C/min.

### Example 23: [50.00%H-BEA zeolite - 50.00% (8.4%ErVO₄ - 91.6% TiO₂ (81% TiO₂ - 8.9% WO₃- 10.1 %SiO₂))] + 0.502% Fe₂O₃ as promoter

An 30% aqueous suspension was made by suspending 14.93g of H-BEA zeolite and 14.93g of 8.4% ErVO₄ (PHT) - 91.6% TiO₂ containing WO₃ and SiO₂ as stabilizer (CristalACTiV^{™} DT58) as prepared in Example 1 in 68.96g DI water and the mixture was agitated with a 1.19g Fe-nitrate solution (Fe₂O₃ content: 12.6%). The pH of the suspension was adjusted to 7.5 using polyethyleneimine. The suspension was homogenized in high shear force mixer to get a homogenous suspension.

The suspension was coated on a 400cpsi monolith core and dried in a sequential process. The process was repeated to achieve a loading of approx. 130g/L. The core was calcined at 550 °C/5h.

### Comparative Example 1: Fe-BEA zeolite

Comparative Example 1 is a commercially availabe Fe-BEA zeolite (ex Clariant; BET: 543 m²/g).

### Comparative Example 2: 8.4% ErVO₄ - 91.6% (81% TiO₂ - 8.9% WO₃ - 10.1 %SiO₂)

12.61g of ErVO₄ (PHT) was mixed with 138.79g of TiO₂ containing WO₃ and SiO₂ as stabilizer (CristalACTiV^{™} DT58) in a high shear force mixer for a period of 2 minutes to a resultant homogenous mixture. Finally, the mixture was calcined at 800 °C/10h with a ramping rate of 10 °C/min to obtain an SCR catalyst as powder. The catalyst powder was sieved through 250 µm sieve to get a homogenous mixture.

### Comparative Example 3: 0.5% Gd₂O₃- 99.5%Fe-BEA zeolite

1.1g of gadolinium nitrate hexahydrate (Gd₂O₃: 45.4%) was dissolved in 150 mL deionized water and stirred to get a clear solution. 100.5g of Fe-BEA zeolite (ex Clariant) was added very slowly to the gadolinium nitrate solution with effective stirring to a homogenous suspension. The suspension was then treated at 100 °C to evaporate excess water. The mixture was dried at 110 °C for 20h before being calcined at 500 °C/3h. The resultant powder was homogenized and sieved through 250 µm.

### Comparative Example 4: 50 wt% Fe-BEA zeolite - 50 wt% (50% Al₂O₃ - 32.5% ZrO₂ - 15% CeO₂ - 2.5% Nd₂O₃)

50g of ceria zirconia alumina oxide with composition 50% Al₂O₃ - 32.5% ZrO₂ - 15% CeO₂-2.5% Nd₂O₃ was prepared according to the process described in WO 2016/046129 A1. In order to make 50g of catalyst powder, 25g of ceria zirconia alumina oxide was mixed in an agate mortar with Fe-BEA zeolite (Clariant; BET: 543m²/g) for 5 minutes.

### Comparative Example 5: 4.05% Fe_{0.8}Al_{0.2}VO₄ - 95.95% TiO₂ (81% TiO₂ - 8.9% WO₃ - 10.1 %SiO₂)

Fe_{0.8}Al_{0.2}VO₄ was prepared according to the process described in WO 2011/127505 A1, compound 8. In order to make 50g of catalyst powder, 2.18g of Fe_{0.8}Al_{0.2}VO₄ was mixed with 51.64 g of TiO₂ containing WO₃ and SiO₂ as stabilizer (CristalACTiV^{™} DT58) in a high shear force mixer to get a homogenous mixture and it was calcined at 650 °C/5h to obtain an SCR catalyst as powder.

### Comparative Example 6: 5% Fe₂O₃- 95% H⁺- USY zeolite

39.65 g of an iron-nitrate solution (Fe₂O₃ content: 12.61%) was diluted with deionized water to get 400g of an aqueous solution and then 104.4g of hydrogen USY zeolite (Zeolyst^{™} CBV720; ROI: 91%; BET: 740 m²/g) was added very slowly with effective stirring at room temperature for 10 minutes. Excess water was evaporated by heating the suspension at 80 °C. The residue was dried at 110 °C for 20h and the mixture was homogenized and then calcined at 600 °C/5h with a ramping rate of 10 °C/min. The SCR catalyst powder was then sieved through 250 µm.

### Comparative Example 7: 20% ZrO₂ - 80% Fe-BEA zeolite

In order to prepare 50g of an SCR catalyst as powder, 45.7g of Zirconium acetate solution (ZrO₂ content: 21.88%) was diluted with 100g de-ionized water and then 44.44g of Fe-BEA zeolite (ex Clariant: ROI:90%) was added to the solution with effective stirring. Excess water was evaporated by heating the suspension at 80 °C before the mixture was dried at 120 °C for 20h. The final mixture was homogenized and then calcined at 600 °C/5h with ramping rate of 10 °C/min.

### Comparative Example 8: 29% Ce-Zr oxide - 71% Fe-BEA zeolite

Initially, 100g of CeZr mixed oxide (74% CeO₂ - 26% ZrO₂) was made by a co-precipitation method using ammonia. 250g of a cerium nitrate solution (CeO₂ content: 29.5%) was mixed with 124.19 g of zirconyl nitrate solution (ZrO₂ content: 21%) and the mixture was diluted with 1500 mL DI water to get a mixed metal nitrate solution. 169.9g of H₂O₂ (30%, cooled to 10 °C) was added to the mixed metal nitrate solution and the mixture was stirred for 30 minutes. Co-precipitation was performed by adding 18% ammonium hydroxide solution (cooled to 10 °C) until pH of 9.5 was reached. The precipitate was then stirred for 30 minutes followed by filtration and washing the precipitate with 2 L of DI water. The precipitate was then dried at 110 °C for a period of 16h and calcined at 500 °C/6h at ramping rate of 10 °C/min. The resultant powder was then homogenized and sieved through 150 µm.

In order to prepare 25g of an SCR catalyst powder, 17.75g of Fe-BEA zeolite was mixed with 7.25g of CeZr mixed oxide in an agate mortar for 10 minutes and the mixture was calcined at 650 °C/5h.

### Comparative Example 9: Fe-MFI zeolite

Comparative Example 9 is a commercially available Fe-MFI zeolite (ex Clariant; BET: 373m²/g).

### Comparative Example 10: 50% H-BEA zeolite - 50% TiO₂ (90%TiO₂ - 10%WO₃)

5.05g of H-BEA zeolite was mixed with 5.05g of TiO₂ containing WO₃ as stabilizer (CristalACTiV^{™} DT52) in an agate mortar for 10 minutes and then the mixture was calcined at 600 °C/5h. Finally, it was sieved through 250 µm.

### Comparative Example 11: 20% Fe-BEA zeolite - 6% V₂O₅ - 74% TiO₂ (90% TiO₂ - 10% WO₃)

150g of the SCR catalyst was prepared as powder by placing 112.12 g of TiO₂ containing WO₃ as stabilizer (CristalACTiV^{™} DT52) in a high shear force mixer and adding to it 62.32g of Vanadium oxalate solution (V₂O₅ content: 14.46%) and mixing for one minute. 30.3g of Fe-BEA zeolite (ex Clariant) was added to the mixture and further mixed for an additional two minutes. The mixture was calcined at 600 °C/5h and then sieved through 250 µm.

### Comparative Example 12: 20% Fe-BEA zeolite - 6.7% ErVO₄ - 73.3% TiO₂ (81% TiO₂ - 8.9% WO₃ - 10.1 %SiO₂)

In order to prepare 20g of an SCR catalyst as powder; 1.36g of ErVO₄ (PHT) and 14.8g of TiO₂ containing WO₃ and SiO₂ as stabilizer (CristalACTiV^{™} DT58) were mixed in an agate mortar for 10 minutes. 4.04g of Fe-BEA zeolite (Clariant) was added to the mixture and further mixed in an agate mortar for an additional 10 minutes. Finally, the mixture was calcined at 700 °C/5h with a ramping rate of 10 °C/min and sieved through 250 µm.

### Comparative Example 13: 50% Fe-BEA zeolite - 1.35% V₂O₅ - 2.85% Er₂O₃- 45.8% TiO₂ (81% TiO₂ - 8.9% WO₃ - 10.1 %SiO₂)

In order to prepare 150g of an SCR catalyst as powder; 4.32g of Er₂O₃ and 69.39g of TiO₂ containing WO₃ and SiO₂ as stabilizer (CristalACTiV^{™} DT58) were mixed in high shear force mixer for 2 minutes before adding 14g of Vanadium oxalate solution (V₂O₅ content: 14.46%) and mixing for an additional 1 minute. 75.76 g of Fe-BEA zeolite (Clariant) was added to the mixture and further mixed for an additional 2 minutes. Finally, the mixture was calcined at 700 °C/5h with a ramping rate of 10 °C/min and sieved through 250 µm.

### Conditions for catalytic testing

### Sample preparation:

Powders yielded by the process according to present invention were pressed into pellets, crushed, and sieved in the range of 200-315 µm.

### Measurement of catalytic activity

All catalytic tests were conducted in a 16-channel flow-through quartz reactor. A quadrupole mass spectrometer (PrismaQMS 200, Pfeiffer Vacuum Technology) was used for product analysis in the effluent gases. Activity of the catalysts was measured at temperatures of 575 °C and 600 °C

The particle size of the catalyst was obtained by pressing in a hydraulic press followed by crushing and sieving.

In Table 1 below there are set out reaction conditions and gas composition for catalytic tests:

| | |
|---|---|
| Catalyst weight | 30 mg |
| Particle size | 200-315 µm |
| Total flow | 90 mL/min |
| Space velocity | 100 000 h⁻¹ |
| Temperature | 575 °C and 600 °C |
| NO conc. | 50 ppm |
| NH₃ conc. | 50 ppm |
| O₂ conc. | 15% |
| H₂O conc. | 5% |
| Ar conc. | 2% |
| He conc. | balance |

Indications in "%" in the above table refer to "vol%" .

30 mg of each catalyst was loaded into quartz reaction tubes and SiC was added to dilute each catalytic bed up to 100 mg. Each catalyst was measured in duplicate and the average value of NO reduction was then calculated.

### Results of catalytic testing of SCR catalysts powders

Testing was performed according to the parameters as disclosed in Table 1 above.

Table 2 below shows the NOₓ conversion in % at 575 °C and 600 °C with catalysts prepared according to Examples 1 to 22 and Comparative Examples 1 to 13.

**Table 2**

| **Ex.No.** | **SCR Catalyst composition** | **[%] deNOₓ at 575°C** | **[%] deNOₓ at 600°C** |
|---|---|---|---|
| **Ex. 1** | 50% Fe-BEA zeolite - 50% (8.4% ErVO₄ - 91.6%TiO₂ (81% TiO₂ - 8.9% WO₃ - 10.1 %SiO₂) | 50 | 50 |
| **Ex. 2** | [54.55% Fe-BEA zeolite - 45.45% (8.4% ErVO₄ - 91.6%TiO₂ (81% TiO₂ - 8.9% WO₃ - 10.1 %SiO₂)] + 13.63% ZrO₂ as promoter | 56 | 57 |
| **Ex. 3** | 50% Fe-BEA zeolite - 4.2% ErVO₄ - 45.8% TiO₂ (90% TiO₂ - 10% WO₃) | 48 | 45 |
| **Ex. 4** | 70% Fe-BEA zeolite - 30% (8.4% ErVO₄ - 91.6% TiO₂ (81% TiO₂ - 8.9% WO₃ - 10.1 %SiO₂)) | 47 | 44 |
| **Ex. 5** | [50% Fe-BEA zeolite - 4.2% ErVO₄ - 45.8% TiO₂ (90% TiO₂ - 10% WO₃)] + 13.63% ZrO₂ as promoter | 50 | 48 |
| **Ex. 6** | [67.25% Fe-BEA zeolite - 32.75% (8.4% ErVO₄ -91.6% TiO₂ (81% TiO₂ - 8.9% WO₃ - 10.1 %SiO₂)] + 9.12% ZrO₂ as promoter | 53 | 51 |
| **Ex.7** | 50% Fe-USY zeolite - 50% (8.4% ErVO₄ - 91.6% TiO₂ (81% TiO₂ - 8.9% WO₃ - 10.1% SiO₂) | 53 | 55 |
| **Ex. 8** | 50% Fe-BEA zeolite - 4.2% LaVO₄ - 45.8% TiO₂ (81% TiO₂ - 8.9% WO₃ - 10.1 %SiO₂) | 49 | 50 |
| **Ex. 9** | 50% Fe-BEA zeolite - 4.2% GdVO₄ - 45.8% TiO₂ (81% TiO₂ - 8.9% WO₃ - 10.1 %SiO₂) | 50 | 53 |
| **Ex. 10** | 50% Fe-BEA zeolite - 4.2% YVO₄ - 45.8% TiO₂ (81% TiO₂ - 8.9% WO₃ - 10.1 %SiO₂) | 51 | 52 |
| **Ex. 11** | 50% Fe-MFI zeolite - 50% (8.4% ErVO₄ - 91.6% TiO₂ (81% TiO₂ - 8.9% WO₃ - 10.1 %SiO₂) | 43 | 43 |
| **Ex. 12** | [54.54% Fe-BEA zeolite - 3.82% LaVO₄ - 41.64% TiO₂ (81% TiO₂ - 8.9% WO₃ - 10.1 %SiO₂)] + 13.63% ZrO₂ as promoter | 53 | 56 |
| **Ex. 13** | 50% H-BEA zeolite - 50% (8.4%ErVO₄ - 91.6% TiO₂ (81% TiO₂ - 8.9% WO₃ - 10.1 %SiO₂)) | 57 | 62 |
| **Ex. 14** | 50% H-BEA zeolite - 4.2% ErVO₄ - 45.8% TiO₂ (81% TiO₂ - 8.9% WO₃ - 10.1 %SiO₂) | 60 | 63 |
| **Ex. 15** | 30% Fe-BEA zeolite - 20% H-BEA zeolite - 50% (8.4%ErVO₄ - 91.6% TiO₂ (81% TiO₂ - 8.9% WO₃ - 10.1 %SiO₂) | 52 | 56 |
| **Ex. 16** | 40% H-BEA zeolite - 60% (8.4%ErVO₄ - 91.6% TiO₂ (81% TiO₂ - 8.9% WO₃ - 10.1 %SiO₂)) | 58 | 61 |
| **Ex. 17** | 60% H-BEA zeolite - 40% (8.4%ErVO₄ - 91.6% TiO₂ (81% TiO₂ - 8.9% WO₃ - 10.1 %SiO₂)) | 52 | 61 |
| **Ex. 18** | 60% Fe-BEA zeolite - 40% (8.4%ErVO₄ - 91.6% TiO₂ (81% TiO₂ - 8.9% WO₃ - 10.1 %SiO₂) | 45 | 49 |
| **Ex. 19** | 80% Fe-BEA zeolite - 20% (8.4%ErVO₄ - 91.6% TiO₂ (81% TiO₂ - 8.9% WO₃ - 10.1 %SiO₂) | 45 | 46 |
| **Ex. 20** | 90% Fe-BEA zeolite - 0.84% ErVO₄ - 9.16% TiO₂ (81% TiO₂ - 8.9% WO₃ - 10.1 %SiO₂) | 46 | 48 |
| **Ex. 21** | 90% Fe-BEA zeolite - 0.84% GdVO₄ - 9.16% TiO₂ (81% TiO₂ - 8.9% WO₃ - 10.1 %SiO₂) | 47 | 47 |
| **Ex. 22** | [52.35% Fe-BEA zeolite - 4.4% ErVO₄ - 43.25% TiO₂] + 4.66% WO₃ as promotor | 52 | 52 |

### Comparative Examples

| **Ex.No.** | **SCR Catalyst composition** | **[%] deNOₓ at 575°C** | **[%] deNOₓ at 600°C** |
|---|---|---|---|
| **CE. 1** | Fe-BEA zeolite | 43 | 43 |
| **CE. 2** | 8.4% ErVO₄ - 91.6% TiO₂ (81%TiO₂ - 8.9% WO₃ - 10.1% SiO₂)) | 33 | 32 |
| **CE. 3** | 0.5% Gd₂O₃ - 99.5% Fe-BEA zeolite | 52 | 52 |
| **CE. 4** | 50% Fe-BEA zeolite - 50% (50% Al₂O₃ - 32.5% ZrO₂ - 15% CeO₂ - 2.5% Nd₂O₃) | 41 | 39 |
| **CE. 5** | 4.05% Fe_{0.8}Al_{0.2}VO₄ - 95.95% TiO₂ (81%TiO₂ - 8.9% WO₃ - 10.1% SiO₂) | 0.1 | n.a. |
| **CE. 6** | Fe-USY zeolite (5% Fe₂O₃ - 95% H⁺ - USY zeolite) | 52 | 52 |
| **CE. 7** | 20% ZrO₂ - 80% Fe-BEA zeolite | 52.1 | 50 |
| **CE. 8** | 29% Ce-Zr oxide - 71% Fe-BEA zeolite | 30 | 31 |
| **CE. 9** | Fe-MFI Zeolite | 44 | 46 |
| **CE. 10** | 50% H-BEA zeolite - 50% TiO₂ (90% TiO₂ - 10% WO₃) | 51 | 60 |
| **CE. 11** | 20% Fe-BEA zeolite - 6% V₂O₅ - 74% TiO₂ (90% TiO₂ - 10% WO₃) | -37 | -15 |
| **CE. 12** | 20% Fe-BEA zeolite - 6.7% ErVO₄ - 73.3% TiO₂ (81% TiO₂ - 8.9% WO₃ - 10.1% SiO₂) | 45 | 49.3 |
| **CE. 13** | 50% Fe-BEA zeolite - 1.35% V₂O₅ - 2.85% Er₂O₃ - 45.8% TiO₂ (81% TiO₂ - 8.9% WO₃ - 10.1% SiO₂) | 41 | 42 |

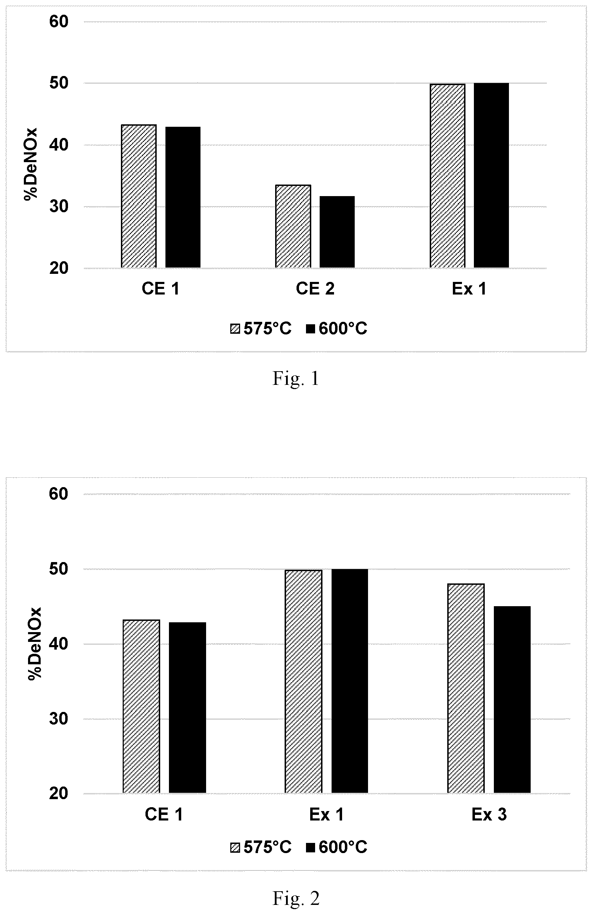

As shown in Table 2, it was demonstrated that inventive Examples 1 to 22 exhibit increased NOₓ performance at high temperature operation (575 °C and 600 °C) compared with state-of-the-art materials, such as Fe-zeolite (Comparative Example 1) and ErVO₄-TiO₂ (Comparative Example 2), as also illustrated in Fig. 1. The inventive examples show an enhanced NOₓ reduction at high temperatures compared to materials disclosed in the prior art, e.g., in WO 2016/046129 A1 (Comparative Example 4), WO 2011/127505 A1 (Comparative Example 5), US 7,695,703 B2 (Comparative Example 7), and WO 2016/046129 A1 (Comparative Example 8) and WO 2014/027207 (Comparative Example 11).

Furthermore, it has been found that Examples 1 and 23 showed higher performance at temperatures of 550 and 570 °C than Comparative Example 1 and 10 when coated on 400 cpsi cordierite cores. The catalysts were evaluated at 550°C and 570°C at a space velocity of 50000 h⁻¹ while employing a feed gas stream consisting of 55 ppm NO, 55 ppm NH₃, 10 vol% O₂ and 5 vol% H₂O as shown in Table 3 below:

**Table 3:**

| **Temperature (°C)** | **deNOₓ of Ex. 1 [%]** | **deNOₓ of Ex. 23 [%]** | **deNOₓ of CE. 1 [%]** | **deNOₓ of CE. 10 [%]** |
|---|---|---|---|---|
| **550** | 87 | 91 | 86 | 76 |
| **570** | 80 | 89 | 77 | 77 |

The results in Fig. 2 show that inventive Examples 1 and 3 (i.e. use of different titania containing component (c) in the blend) exhibited increased NOₓ conversion at 575 °C and 600 °C in comparison to Comparative Example 1.

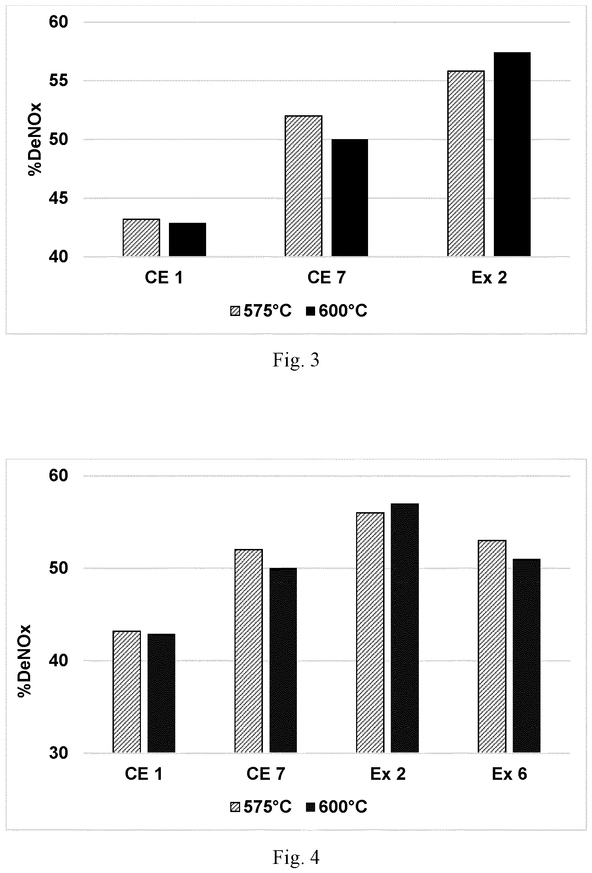

Fig. 3 shows the comparison of inventive Example 2 with Comparative Examples 1 and 7. In Comparative Example 7, 20% ZrO₂ was used as promotor for pure Fe-BEA zeolite while in inventive Example 2, only 13.67% ZrO₂ was used. The results show an increase of activity in Example 2 by 7% and 14% in comparison to Comparative Example 7 at 575 °C and 600 °C, respectively.

In Fig 4. it is illustrated that Examples 2 and 6 according to the invention comprising doped Fe-BEA zeolite also showed enhanced deNOₓ activity compared to pure Fe-BEA zeolite (Comparative Example 1) and with ZrO₂ as promoter (Comparative Example 7) at 575 °C and 600 °C.

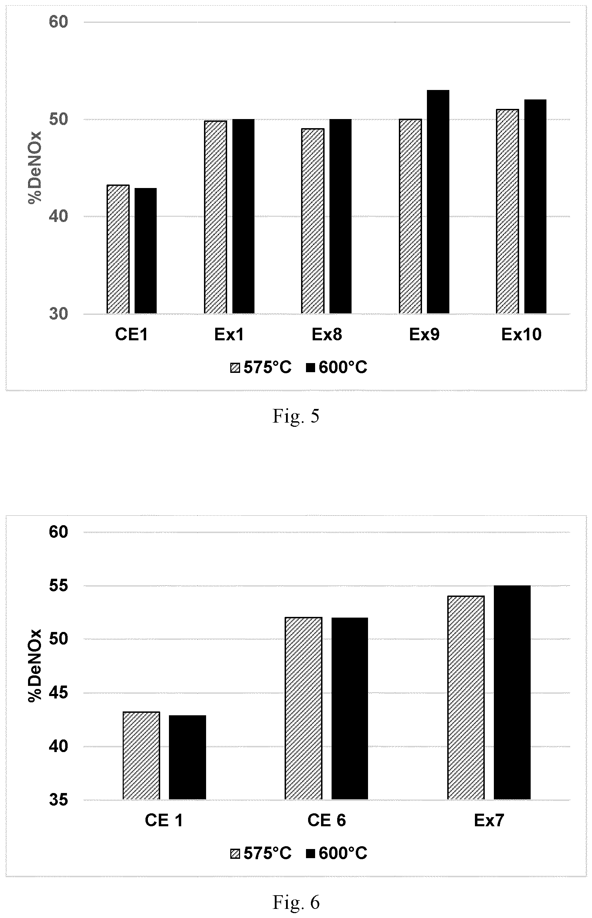

Fig. 5 depicts that Examples 1 (ErVO₄), 8 (LaVO₄), 9 (GdVO₄), and 10 (YVO₄), including different metal vanadates in the blend of zeolite and TiO₂, showing increased performance compared to Comparative Example 1.

In Fig. 6, improved performance of inventive Example 7 comprising 50% Fe-USY zeolite in the blend of MVO₄-TiO₂ over Comparative Examples 1 (Fe-BEA zeolite) and 8 (Fe-USY zeolite) is demonstrated.

Hence, these results demonstrate clear synergy between all three components (a), (b), and (c) of the catalytic composition, leading to better performance than state-of-the-art materials.

## Claims

1. A catalyst composition comprising three components (a), (b) and (c), wherein
(a) is a zeolite compound,
(b) is a metal vanadate of formula MVO₄ and
(c) is a titania (TiO₂) containing component, containing TiO₂ in an amount of at least 70 wt.-%, the remainder being a stabilizer for anatase titania,
wherein the amount of component (a) is >40% to 90%, based on the sum of components (a), (b) and (c),
wherein the amount of component (b) is 0.5 wt.% to 20 wt.%, based on the sum of components (a), (b) and (c),
wherein the amount of component (c) is 5 wt.% to <59.5 wt.%, based on the sum of components (a), (b) and (c).

2. Catalyst composition according to claim 1, **characterized in that** the amount of component (a) is 45% to 70%, preferably 50% to 60%, based on the sum of components (a), (b) and (c).

3. Catalyst composition according to claim 1 or 2, **characterized in that** the zeolite compound (a) is selected from the group consisting of beta zeolite (such as BEA), ultrastable zeolite Y, MFI, CHA (Chabazite), FER (Ferrierite), ERI (erionite), SAPO (silicoaluminophosphates), ALPO (amorphous aluminophospates), and mixtures thereof.

4. Catalyst composition according to any of the preceding claims, **characterized in that** at least part of the zeolite component (a) is an Fe-exchanged zeolite.

5. Catalyst composition according to claim 4, **characterized in that** the Fe-exchanged zeolite is selected from the group consisting of Fe-BEA, Fe-MFI, Fe-USY, Fe-FER, Fe-CHA, Fe-SAPO or mixtures thereof.

6. Catalyst composition according to any of claims 1 to 3, **characterized in that** at least part of the zeolite component (a) is in H⁺-form, in particular is an H⁺-exchanged zeolite, such as H-BEA, H-MFI, H-USY, H-FER, H-CHA, H-SAPO or mixtures thereof.

7. Catalyst composition according to any of the preceding claims, **characterized in that** in component (b) M in MVO₄ is selected from Rare Earth Metals, preferably Er, Y, La, Gd, and mixtures thereof.

8. Catalyst composition according to any of the preceding claims, **characterized in that** the titania in component (c) is in anatase form.

9. Catalyst composition according to any of the preceding claims, **characterized in that** the stabilizer for anatase in component (c) is WO₃ and, optionally, SiO₂.

10. Catalyst composition according to any of the preceding claims, **characterized in that** components (a), (b) and (c) are present in a physical mixture obtained by mixing all three components together.

11. Catalyst composition according to any of the preceding claims, **characterized in that** the composition essentially consists of components (a), (b) and component (c).

12. Catalyst composition according to any of claims 1 to 10, **characterized in that** the composition additionally contains one or more metal oxide promoters, in particular zirconium oxide.

13. Catalyst composition according to claim 12, **characterized in that** the amount of the promoter is 1%-20% by weight, calculated as metal oxide, more preferably 1%-15% calculated as metal oxide, most preferably 5%-15% by weight, calculated as metal oxide based on total weight of the composition.

14. Use of a catalyst composition according to any of the preceding claims as SCR catalyst for removing nitrogen oxides.

15. Use according to claim 14, **characterized in that** the catalyst composition is employed at temperatures of from 300 to 750 °C, preferably 500 - 700 °C, most preferably 550 - 650 °C.
